# EUROPÄISCHE PATENTSCHRIFT

(11) **EP 0 456 276 B1**
(45) Veröffentlichungstag und Bekanntmachung des Hinweises auf die Patenterteilung: **19.07.1995**
(21) Anmeldenummer: 91110737.3
(22) Anmeldetag: 26.09.1988
(51) Int. Cl.: G01B 5/00

(54) **Koordinatenmessgerät**
Coordinate measuring apparatus
Appareil pour mesurer les coordonnées

(30) Priorität: 20.05.1988 WO PCT/EP88/00450
(43) Veröffentlichungstag der Anmeldung: 13.11.1991
(62) Teilanmeldung aus: 88115813.3
(73) Patentinhaber: Firma Carl Zeiss, D-73446 Oberkochen (DE); CARL-ZEISS-STIFTUNG, HANDELND ALS CARL ZEISS, D-73446 Oberkochen (DE)
(72) Erfinder: Herzog, Klaus, W-7082 Oberkochen (DE)

(56) Entgegenhaltungen:
- EP-A- 0 027 060
- EP-A- 0 100 716
- EP-A- 0 157 176
- EP-A- 0 216 041
- GB-A- 18 297
- GB-A- 2 173 311
- PATENT ABSTRACTS OF JAPAN vol. 10, no. 157 (P-464)(2213) 6. Juni 1986 & JP-A-61 11 607

## Beschreibung

Die Erfindung betrifft ein Verfahren zur Ermittlung der Koordinatenwerte eines Tastelementes sowie ein auf der Basis dieses Verfahrens arbeitendes Koordinatenmeßgerät.

Mehrkoordinatenmeßgeräte gibt es in den verschiedensten Ausführungsformen. Eine Übersicht über die unterschiedlichen Bauformen gibt der Artikel von M. Dietsch und H. Lang in Feinwerktechnik und Meßtechnik 86 (1978) Seite 262-269. Allen darin beschriebenen Geräten liegt im Prinzip der gleiche Aufbau zugrunde: Die Geräte bestehen aus drei senkrecht zueinander angeordneten und aufeinander aufbauenden Führungen, längs derer der Tastkopf verschiebbar ist, sowie drei den Führungen zugeordneten Linearmaßstäben.

Da die erste Führung jeweils das Gewicht der darauf aufbauenden, weiteren Führungen tragen muß, ist zur Erreichung einer ausreichend hohen Meßgenauigkeit eine stabile Ausbildung für die Führungen erforderlich, die Deformationen während des Meßvorganges verhindert. Koordinatenmeßgeräte sind deshalb teure und aufwendige Präzisionsinstrumente.

Es sind auch Koordinatenmeßgeräte bekannt, die nicht in einem kartesischen Koordinatensystem, sondern in Kugel- oder Zylinderkoordinaten messen. So ist z.B. in der GB-PS 14 98 009 ein Koordinatenmeßgerät beschrieben, bei dem der Tastkopf mittels dreier hintereinander angeordneter Gelenke beweglich gehalten ist. Die Lage des Tastkopfes wird bei diesem Gerät mit Hilfe von in den Gelenken angeordneten Winkelgebern festgestellt. Ein ähnlich aufgebautes Koordinatenmeßgerät ist aus der US-PS 42 40 205 bekannt. Bei diesem Gerät ist der Tastkopf an einer vertikal verschiebbaren Pinole befestigt, die ihrerseits über drei Gelenke mit vertikal angeordneter Drehachse in einer Ebene geführt ist. Die Lage der Pinole in der Ebene wird mit Hilfe eines Maßstabes und eines Drehgebers gemessen.

Auch bei diesen beiden letztgenannten Geräten, die statt Linearführungen Drehachsen zur Führung des Tastkopfes verwenden, stützen sich die beweglichen Teile der Geräte aufeinander ab. Es werden deshalb Gegengewichte benötigt, mit denen die beweglichen Maschinenteile ausbalanciert werden müssen, was das Gewicht und die Masse der bewegten Maschinenteile vergrößert. Außerdem ist es erforderlich, die Lagerungen für die Drehachsen sehr stabil auszuführen, da sie jeweils das Gewicht der darauf aufbauenden Teile tragen müssen.

Dennoch ist es nicht möglich, mit diesen Geräten ausreichend genaue Messungen durchzuführen, da die einzelnen Teile des Gelenkarmes während der Messungen wechselnden Lastverhältnissen ausgesetzt sind und sich deshalb unkontrolliert deformieren.

Desweiteren sind sogenannte Höhenmeßgeräte bekannt. Sie bestehen aus einem in einer Ebene manuell frei verschiebbaren Träger, an dem ein Längenmeßtaster vertikal verschiebbar geführt ist. Mit dem der Führung zugeordneten Maßstab lassen sich allein die Höhen des Tasters über der Ebene an verschiedenen Stellen über der Ebene messen und in Relation bringen. Die Lage des Höhenmeßgerätes in dieser Ebene wird nicht erfaßt. Zudem ist der Tastkopf eines Höhenmeßgerätes wenn überhaupt dann nur entlang der Vertikalen auslenkbar.

Diese bekannten Höhenmeßgeräte sind also keine Mehrkoordinatenmeßgeräte, da sie nur zur Messung in einer einzigen Dimension geeignet sind. Zwar ist auch schon ein Höhenmeßgerät bekannt geworden, das über eine Kulissenführung in zwei Koordinaten geführt ist und dessen Lagekoordinaten in der Ebene durch den Kulissenführungen zugeordnete Maßstäbe ermittelt wird. Dieses Gerät entspricht jedoch wieder dem eingangs genannten, prinzipiellen Aufbau bekannter Mehrkoordinatenmeßgeräte und besitzt deshalb u.a. den Nachteil, daß Rechtwinkligkeitsfehler der Führungen direkt in das Meßergebnis eingehen. Außerdem läßt sich dieses bekannte Gerät nicht drehen, so daß zusätzlich ein Drehtisch für das zu vermessende Werkstück benötigt wird.

Aus der DE-OS 32 05 362 sowie der DE-OS 36 29 689 sind Koordinatenmeßgeräte auf der Basis eines von Hand bzw. von einem Roboter über das zu vermessende Werkstück geführten Tastelementes bekannt, welches aus verschiedenen Richtungen mit Hilfe von Laser-Entfernungsmessern angemessen wird. Diese Geräte besitzen jedoch den Nachteil, daß die winkelmäßige Ausrichtung des Tastelementes nur unter hohem Aufwand und selbst dann nicht in jeder Lage im Meßraum bestimmt werden kann. Außerdem kann mit dem Tastelement das zu vermessende Werkstück nicht ohne weiteres umfahren werden, da dann zumindest einige der Meßstrahlen unterbrochen würden.

In der EP-A-02 160 41 ist ein Koordinatenmeßgerät mit einem auf einer ebenen Führungsplatte verschiebbaren Träger beschrieben, der einen vertikal verschiebbaren Tastkopf besitzt und Meßsysteme zur Messung der vertikalen Position des Tastkopfs und zur Messung der Lage des Trägers in der Ebene. Die Meßsysteme, mit denen sich auch die Drehlage des frei verschiebbaren Trägers ermitteln läßt, sind jedoch in die waagerechte Führungsplatte nach Art eines Kreuzgitters eingelassen, wodurch diese sehr aufwendig in der Herstellung ist, insbesondere wenn auf eine hohe Auflösung der zu messenden Position Wert gelegt wird.

Aus der GB-A-21 733 11 ist eine Einrichtung zum Digitalisieren von z.B. Karten oder Zeichnungen bekannt. Diese Einrichtung besteht aus zwei den zu führenden Zielpunkt mit zwei feststehenden Referenzpunkten verbindenden Lenkern veränderlicher Länge, denen Maßstäbe oder Winkelencoder zugeordnet sind. Zur Koordinatenmessung an Werkstücken in allen drei Raumrichtungen ist diese Einrichtung nicht geeignet.

Es ist die Aufgabe der vorliegenden Erfindung, ein Koordinatenmeßgerät zu schaffen, das es erlaubt, mit möglichst geringem Aufwand eine Vielzahl verschiedener Meßaufgaben mit ausreichend hoher Genauigkeit in allen Raumrichtungen durchzuführen.

Diese Aufgabe wird durch die im Kennzeichen des Anspruchs 1 angegebenen Merkmale gelöst.

Die erfindungsgemäße Lösung besitzt mehrere Vorteile: Der Träger des Tastkopfes stützt sich auf einer ebenen Führungsplatte ab und kann dort frei manuell oder motorisch verschoben werden. Es ist deshalb möglich, die Lage dieses Trägers in der Ebene mit einem Gelenkarm und diesem zugeordneten Meßsystemen festzustellen, der keinerlei Gewicht zu tragen hat. Der Gelenkarm wird einfach an einem Ende an der Führungsplatte und am anderen Ende am Träger angelenkt und kann sich auch beispielsweise selbst über zusätzliche Luftlager auf der Führungsplatte abstützen. Es sind daher keine großdimensionierten Drehachsen oder Gegengewichte erforderlich, so daß die ganze Anordnung eine geringe Masse besitzt und leicht bewegt werden kann. Da der Gelenkarm selbst keine Lasten zu tragen hat, treten keine Verbiegungen im Gelenkarm auf, was der Meßgenauigkeit des Gerätes zugute kommt. Außerdem sind Rechtwinkligkeitsfehler bei der Ermittlung der Ebenenkoordinaten vermieden, da keine aufeinander auf bauenden Führungen verwendet werden. Das Gerät ist zudem in der Ebene drehbar, so daß eine Vielzahl von Meßaufgaben auch ohne Drehtisch für das Werkstück gelöst werden können. Der erfindungsgemäße Aufbau ermöglicht es, Koordinatenmeßgeräte in kompakter und vereinfachter Bauform bei gleichzeitig guter Zugänglichkeit des Meßraums zu schaffen.

Der bzw. die Gelenkarme, mit denen der Träger an der Führungsplatte befestigt ist, kann auf unterschiedlicher Art und Weise ausgeführt werden. So ist es beispielsweise möglich, einen aus drei Drehachsen aufgebauten Gelenkarm oder einen aus zwei Drehachsen und einem Auszug variabler Länge aufgebauten Gelenkarm zu verwenden oder sogar zwei Gelenkarme vorzusehen. Die Lage des Trägers in der Ebene läßt sich ohne weiteres durch den Drehachsen zugeordnete Winkelgeber bzw. den Auszügen variabler Länge zugeordnete Maßstäbe ermitteln. Hierbei erfolgt die Berechnung der genauen Koordinatenwerte aus den Signalen der Meßwertgeber durch einen daran angeschlossenen elektronischen Rechner.

Besonders vorteilhaft kann es sein, wenn der oder die Gelenkarme am oberen Ende des Trägers angelenkt sind, wo sie nicht mit den auf der ebenen Führungsplatte aufgebauten Werkstücken kollidieren können. Der Träger kann dann um 360° frei um das Werkstück herumgeführt werden, so daß ein separater Drehtisch für das Werkstück entbehrlich ist.

Von besonderem Vorteil ist hierbei, wenn der Abstand zwischen der vertikalen Drehachse, an der die Gelenkarme angelenkt sind, und der Tastkugel möglichst gering ist. Denn je kleiner dieser Abstand ist, desto ungenauer kann das zur Messung dieses Drehwinkels verwendete Winkelmeßsystem sein bzw. wird dann keine besonders hohe Auflösung für den Winkelgeber gefordert.

Um diese Bedingung geometrisch einhalten zu können, besitzt der Träger zweckmäßig eine etwa C-förmige Gestalt, indem eine schlanke Säule auf einer im Querschnitt großflächigeren Grundplatte aufbaut. Am oberen Ende besitzt die Säule einen in Richtung des Taststifts vorstehenden Arm. An diesem ist das Drehgelenk angeordnet ist, über das die Gelenkarme an das Höhenmeßgerät angebunden sind.

Außerdem ist dann der Werkstücktisch zweckmäßig mit einem mittig angeordneten, schlanken Fuß versehen, derart, daß der Träger mit seiner Grundplatte unter die Tischfläche und damit nahe an das Werkstück heranfahren kann. Diese Form des Werkstücktisches bietet außerdem weitere Vorteile. Denn der schlanke Fuß des Tisches kann als Bezugspunkt für den Gelenkarm dienen. Wenn dieser um den Fuß drehbar am Werkstück angelenkt ist, läßt sich der Träger ebenfalls um 360° frei um das Werkstück herumführen.

Zur Erreichung möglichst hoher Meßgenauigkeiten muß sichergestellt werden, daß keine Meßfehler infolge Verkippungen des Trägers um die vertikale Achse entstehen. Diese können kompensiert werden, indem entweder Meßsysteme in der Grundplatte des Trägers angeordnet werden, die den Abstand zur Führungsplatte messen, oder direkt die Neigung messende elektronische Waagen am Träger angebracht werden.

Wenn man mit Sensoren arbeitet, die den Abstand zur Oberfläche der ebenen Führungsplatte messen, dann geht deren Genauigkeit bzw. die Abweichung ihrer Topographie von einer idealen Ebene in das Meßergebnis ein. Um diesen Einfluß zu eliminieren ist es zweckmäßig, die Topographie der ebenen Führungsplatte in einem separaten Korrekturlauf vorab zu ermitteln und als zweidimensionale Korrekturmatrix abzuspeichern.

Das auf der Basis des erfindungsgemäßen Verfahrens arbeitende Koordinatenmeßgerät kann sowohl handgeführt betrieben werden als auch mit einem Antrieb versehen werden, der den Träger in der Ebene verschiebt. Ein derartiger Antrieb sollte vorzugsweise im Schwerpunkt des Trägers an diesem angreifen. Dies ermöglicht hohe Verfahrgeschwindigkeiten und Beschleunigungen. Da ein solcher Antrieb eventuell jedoch die freie Drehbarkeit des Trägers um 360° behindern kann, ist dann das Werkstück auf einem Drehtisch anzuordnen, damit die freie Zugänglichkeit von allen Richtungen aus gewährleistet ist, oder es wird mit zwei gleichartig aufgebauten Geräten beiderseits des festmontierten Werkstückes gemessen.

Weitere Vorteile der Erfindung ergeben sich aus der nachstehenden Beschreibung von Ausführungsbeispielen anhand der Figuren 1-7 der beigefügten Zeichnungen.
- Figur 1: ist die Prinzipskizze eines ersten Ausführungsbeispiels der Erfindung;
- Figur 2: ist die perspektivische Prinzipskizze eines zweiten, bevorzugten Ausführungsbeispiels der Erfindung;
- Figur 3: zeigt die Unterseite eines Teils des Lenkers (113) aus Figur 2;
- Figur 4: zeigt einen der Lenker (113) aus Figur 2 in der Seitenansicht;
- Figur 5a: ist eine detailliertere Darstellung eines in Verbindung mit dem Gerät nach Figur 2 bzw. 3 alternativ verwendbaren interferometrischen Gelenkarmes in einer vertikalen Ebene;
- Figur 5b: zeigt den Gelenkarm aus Figur 5a in Aufsicht;
- Figur 6a: ist eine vereinfachte Prinzipskizze, die den Gerätetyp nach Figur 2-5 in Aufsicht zeigt;
- Figur 6b: ist eine vereinfachte Prinzipskizze, die den Gerätetyp nach Figur 2-5 in Seitenansicht zeigt;
- Figur 7: ist eine perspektivische Prinzipskizze eines motorisierten Ausführungsbeispiels der Erfindung;

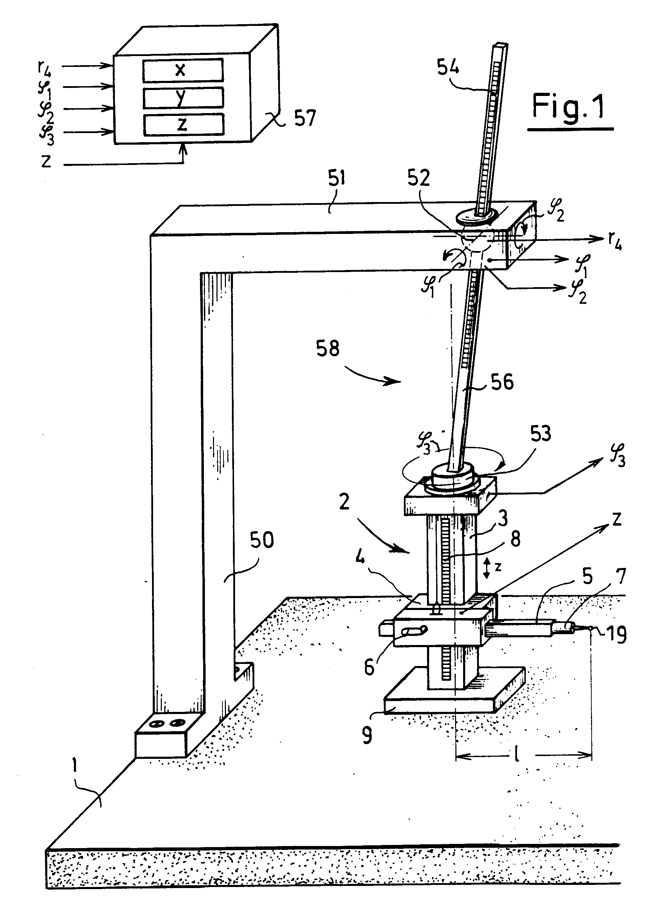

Das in Figur 1 dargestellte Koordinatenmeßgerät baut im wesentlichen auf einem Höhenmeßgerät (2) bekannter Bauart auf, das auf einer ebenen Granitplatte (1) verschiebbar ist. Ein solches Höhenmeßgerät besteht aus einer vertikalen Säule (3), entlang der ein Schlitten (4) in der Höhe, d.h. in Z-Richtung verschiebbar ist. Zur Messung der Z-Position trägt die Säule (3) einen Maßstab (8), der von einem in der Darstellung nicht sichtbaren photoelektrischen Gebersystem im Schlitten (4) abgetastet wird. Im Schlitten (4) ist ein Arm (5) waagerecht verschiebbar gelagert. Der Arm (5) trägt an seinem Ende einen Taster (7) und kann mittels einer Klemmeinrichtung im Schlitten (4) über den mit (6) bezeichneten Hebel festgeklemmt werden.

Das Gewicht von Schlitten (4), Meßarm (5) und Tastkopf (7) ist über ein in der Säule (3) geführtes Gegengewicht ausbalanciert.

Damit das Höhenmeßgerät (2) reibungsfrei verschoben werden kann, stützt es sich über in der Basis (9) der Säule (3) integrierte Luftlager auf der Granitplatte (1) ab.

Allerdings ist der Tastkopf (7) kein eindimensionaler Längenmeßtaster, sondern vielmehr ein in allen drei Richtungen ansprechender 3D-Tastkopf z.B. des in der US-PS 41 77 568 beschriebenen Typs.

Wie bereits eingangs ausgeführt erfassen Höhenmeßgeräte allein die Höhen (Z) der vom Tastkopf (7) angetasteten Meßpunkte. Damit auch die Koordinatenwerte (X und Y) in der Ebene in der Granitplatte (1) meßtechnisch erfaßt werden, ist der zur Messung der Ebenenkoordinaten (X,Y) verwendete Gelenkarm (58) am oberen Ende der Säule des Höhenmeßgerätes (2) angelenkt. Der Gelenkarm (58) besteht aus einer Stange, die mit einem Ende über ein erstes kardanisches Doppelgelenk (53) allseits beweglich am Höhenmeßgerät (2) befestigt ist. Die Stange (56) ist in einer ebenfalls kardanisch an einem zweiten Gelenk (52) gelagerten Hülse verschiebbar gelagert, die an dem über den Meßbereich hinausragenden Teil (51) eines feststehenden Trägers (50) befestigt ist. In der Hülse befindet sich das Gebersystem für den an der Stange (56) angebrachten Linearmaßstab (54).

Dem Kardangelenk (52) sind außerdem zwei Drehgeber zur Messung der Winkeln φ₁ und φ₂ zugeordnet, den die Stange (56) relativ zur Basis (1) des Höhenmeßgerätes (2) einnimmt. Weiterhin ist dem Gelenk (53) an der Oberseite des Höhenmeßgerätes (2) ein Drehgeber zur Messung des Winkels φ₃ zugeordnet, um den das Höhenmeßgerät um die Vertikale gedreht werden kann.

Aus dem Längenmeßwert (r₄) des Maßstabes (54), den Winkeln φ₁, φ₂ und φ₃ der Winkelencoder und dem Z-Wert des Maßstabes am Höhenmeßgerät (2) rechnet der Rechner (57) des Koordinatenmeßgerätes die kartesischen Koordinaten (X,Y und Z) der Tastkugel des Gerätes. Hierbei findet eine Umwandlung der Polarkoodinaten (r₄, φ₁ und φ₂) in ein auf die Ebene der Granitplatte projiziertes kartesisches Koordinatensystem statt.

Infolge der Anlenkung des Gelenkarmes (58) am oberen Ende des Höhenmeßgerätes (2) ist dessen Beweglichkeit in der Ebene im Vergleich zu den dargestellten übrigen Ausführungsbeispielen am geringsten gestört.

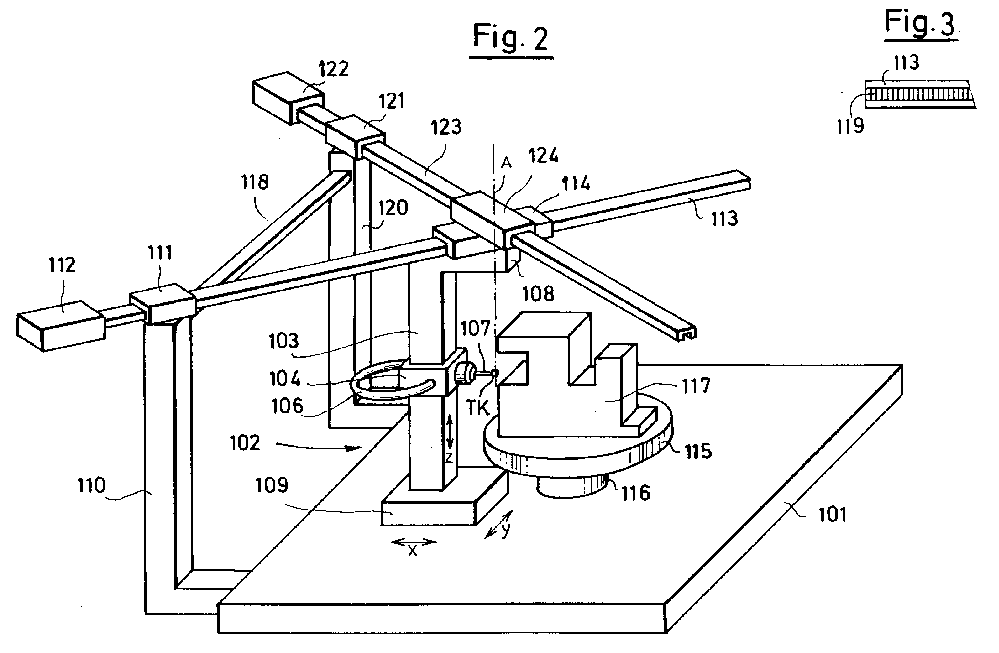

Ein weiteres Ausführungsbeispiel der Erfindung, bei dem ebenfalls die Gelenkarme am oberen Ende des Höhenmeßgerätes angelenkt sind, ist in Figur 2 dargestellt. In diesem Ausführungsbeispiel besitzt das Höhenmeßgerät (102) im Vertikalschnitt eine etwa C-förmige Gestalt, wobei den unteren Schenkel des C eine Basisplatte (109) bildet, auf der ein vertikaler Träger (103) aufbaut. An diesem Träger (103) ist ein Schlitten (104) für den Tastkopf (107) vertikal verschiebbar gelagert. Der Schlitten (104) ist mit einem Bügel (106) versehen, mit dessen Hilfe das Gerät (102) auf einer ebenen Granitplatte (101) verschoben werden kann und der Tastkopf (107) in der Höhe verstellt werden kann.

Das Oberteil (108) des Trägers (103) springt in Richtung auf die Taststiftspitze vor und bildet den oberen Schenkel des C. An diesem vorwärts ausragenden Teil (108) sind die Lenker mit den Maßstäben zur Messung der Position des Höhenmeßgeräts in der Ebene (X,Y) drehbar angelenkt, wobei mit (A) die Drehachse bezeichnet ist. Die Lage der Drehachse ist hierbei so gewählt, daß sie durch den Mittelpunkt der Tastkugel (Tₖ) am Tastkopf (107) geht bzw. nur einen geringen Abstand davon besitzt.

An der Rückseite der Granitplatte (101) sind zwei Säulen (110) und (120) fest angebracht. Sie tragen beide an ihrer Oberseite ein Drehlager, über das die dort mit Haltern (111) und (121) befestigten Lenker (113) und (123) drehbar gehalten sind. Die Lenker (113) und (123) tragen wie aus der Figur 3 hervorgeht an ihrer Unterseite eine Maßstabsteilung (119). Sie sind in dem am oberen Ende um die Achse (A) am Höhenmeßgerät drehbaren Führungsgehäusen (114) und (124) linear verschiebbar gelagert und stehen dort über die Vorderseite des Höhenmeßgerätes (102) vor. Natürlich ist es auch möglich, die Lenker so anzubringen, daß sie nach hinten, über die Säulen (110) und (120) hinaus vorstehen.

Bei geringeren Anforderungen an die Meßgenauigkeit läßt sich ein Vorstehen der Lenker überhaupt vermeiden, wenn anstelle der starren Lenker Meßbänder verwendet werden, die über eine Umlenkrolle in das Innere der Säulen (110,120) geführt und von einer dort angebrachten Feder unter Spannung gehalten werden.

An ihrem hinteren Ende tragen die Lenker (113,123) je ein Gegengewicht (112) bzw. (122). Mit Hilfe dieser Gegengewichte sind die Lenker (113) und (123) so ausbalanciert, daß sie kräftefrei auf der Oberseite des Trägers (103) aufliegen. Hierdurch sind wechselnde Lastverhältnisse vermieden, die andernfalls auftreten würden, wenn sich der Abstand zwischen dem Höhenmeßgerät (102) und den Säulen (110) bzw. (120) ändert.

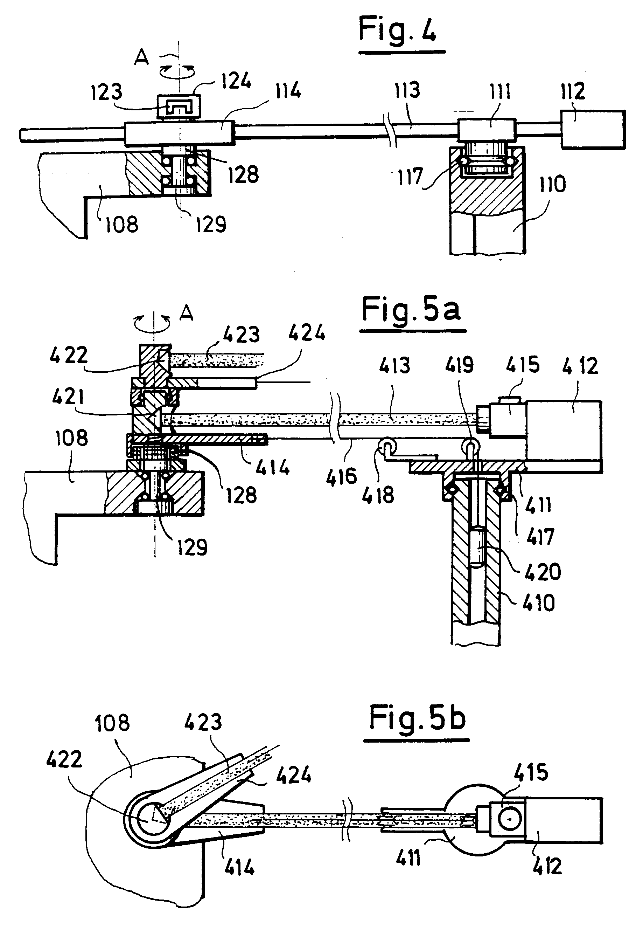

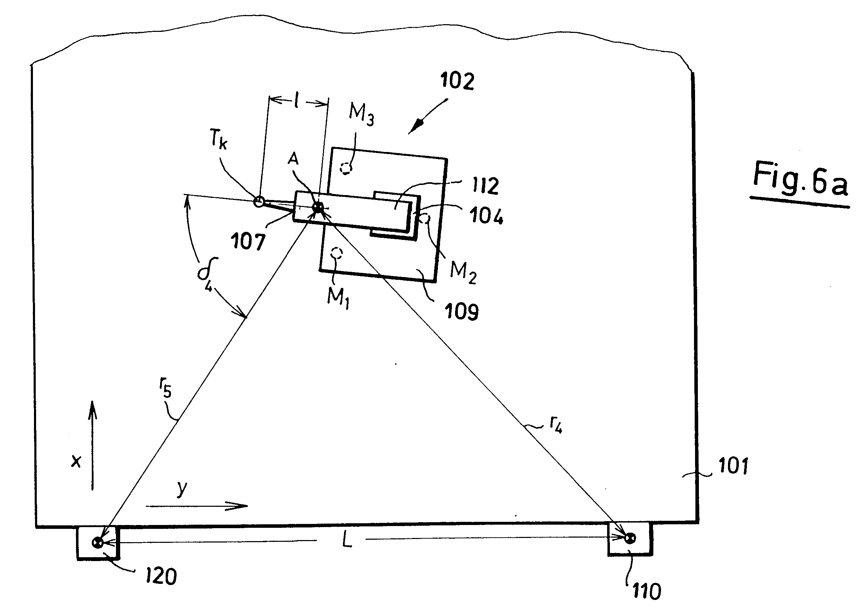

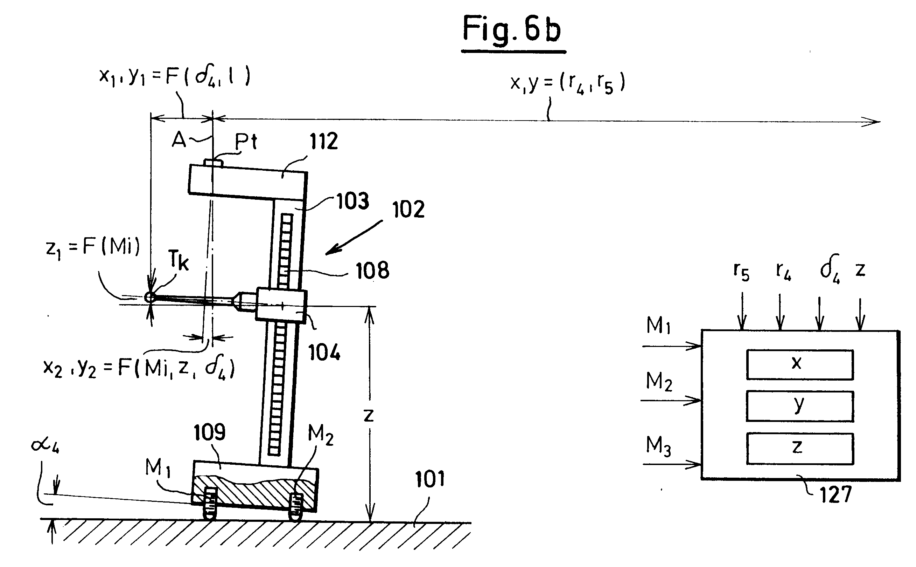

Die Art und Weise, in der die Säule (110) und das Höhenmeßgerät (102) durch den Lenker (113) verbunden sind, ist in Figur 4 nochmals deutlicher dargestellt. Im Teilschnitt erkennt man hier das Drehlager (117) an der Oberseite der Säule (110) sowie das Drehlager (129) im Oberteil (108) des Höhenmeßgerätes. Diesem letzteren Lager (110) ist ein Winkelencoder (128) zugeordnet, der die Drehlage des Höhenmeßgerätes (102) relativ zur Ausrichtung des Lenkers (113) mißt. Die Gehäuse (114) und (124), in denen die Lenker (113) und (123) längs geführt sind, enthalten außerdem ein photoelektrisches inkrementales Gebersystem, von dem die Maßstabsteilung (119) in Figur 6) der in den Lenkern (113) und (123) enthaltenen Linearmaßstäbe abgetastet wird.

An ihrem oberen Ende sind die beiden Säulen (110) und (120) durch einen Stab (118) mit geringem thermischen Ausdehnungskoeffizienten wie z.B. Invar miteinander verbunden. Diese Maßnahme spielt eine besondere Rolle, da der Abstand der beiden Säulen bzw. der davon getragenen Drehpunkte, wie noch anhand von Figur 6a und 6b beschrieben werden wird, die Basis für die Messung der ebenen Koordinaten des Höhenmeßgerätes (102) bildet. Wenn zusätzlich sichergestellt ist, daß die Linearmaßstäbe ebenfalls aus Material mit geringem thermischen Ausdehnungskoeffizienten bestehen, oder die thermische Ausdehnung des Stabes und der Maßstäbe durch eine Temperaturmessung erfaßt wird, läßt sich die Lage der Drehachse (A) bzw. des Höhenmeßgerätes in der Ebene (X,Y) mit sehr hoher Genauigkeit bestimmen.

Das zu vermessende Werkstück ist in Figur 2 mit (117) bezeichnet. Es ruht auf einem Werkstücktisch, dessen Platte (115) über einen mittig angebrachten, schlanken Fuß (116) auf der Granitplatte (101) befestigt ist. Durch diese Maßnahme und in Verbindung mit der freien Drehbarkeit des Höhenmeßgerätes unter den oben angebrachten Lenkern (113) und (123) ist es möglich, mit dem Höhenmeßgerät (102) um das Werkstück (117) vollständig herumzufahren bzw. das Werkstück von allen Seiten zu vermessen.

Mit einem Koordinatenmeßgerät des in Figur 2 beschriebenen Aufbaues können sehr viele Meßaufgaben gelöst werden, die bisher einen aufwendigen Rundtisch oder umständliche Tasterformen bzw. ein Dreh-Schwenk-Gelenk erforderten wie z.B. schräge Bohrungen in prismatischen Werkstücken oder Rotationsteile.

Die Lenker (113) und (123) mit den Linearmaßstäben im Ausführungsbeispiel nach Figur 2-4 können außerdem durch interferometrische Längenmeßsysteme ersetzt werden. Dies ist insbesondere dann vorteilhaft, wenn große Meßlängen gewünscht werden, wobei dann die Lenker unhandlich lang werden. Ein für große Meßlängen modifiziertes Ausführungsbeispiel ist in den Figuren 5a und 5b dargestellt. Danach befinden sich auf jeder der beiden Säulen am hinteren Ende der Grundplatte (101) auf einer drehbar gelagerten Platte (411) ein Lasergenerator (412) mit angesetztem Interferometerkopf (415). In der Figur 5a bzw. 5b ist die betreffende Säule mit (410) bezeichnet. Auf das Drehlager (129) am oberen Teil (108) des Höhenmeßgerätes ist eine Trägerplatte (414) montiert auf der das vom Interferometer (415) angemessene Reflektorprisma (421) befestigt ist. Ein zweites Reflektorprisma (422) ist seinerseits drehbar auf dem Träger des Prismas (421) gelagert und wird von einem zweiten, hier nicht dargestellten Interferometer auf der anderen Säule angemessen. Die Tragplatte (414) wird mit Hilfe eines Spanndrahtes (416) immer so nachgeführt, daß der Meßstrahl (413) des Interferometers senkrecht auf das Reflektorprisma (421) auftrifft. Hierzu ist der Spanndraht (416) über die beiden Rollen (418) und (419) auf der drehbaren Platte (411) geführt. Die Spannung des Drahtes stellt ein Gegengewicht (420) sicher. Dieses ist in der hohlen Säule (410) geführt. Für das zweite Prisma (422) ist eine entsprechende Einrichtung zum Nachführen vorgesehen.

Mit Hilfe der beiden interferometrischen Meßstrahlen (413) und (423) kann die Lage der Drehachse (A) in der waagerechten Ebene (X,Y) aufgrund einfacher trigonometrischer Beziehungen eindeutig bestimmt werden. Dies wird unmittelbar aus Figur 6a ersichtlich. Dort ist der Abstand zwischen den beiden Drehachsen in den Säulen (110) und (120) mit (L) bezeichnet und die von den Maßstäben bzw. Interferometersystemen gemessenen Abstände von diesen Drehachsen zur Drehachse (A) am Höhenmeßgerät sind mit r₄ bzw. r₅ bezeichnet.

Zur Durchführung von Koordinatenmessungen ist es jedoch erforderlich, die genaue Lage der Tastkugel (Tₖ) in der Ebene zu kennen. Hierzu muß außerdem die Drehlage des Höhenmeßgerätes (102) bzw. des Trägers (103) bestimmt werden. Dies geschieht durch den Winkelgeber (128) (Figur 4 bzw. 5a), der den Winkel δ₄ zwischen der Taststiftachse und einem der beiden Lenker bzw. Meßstrahlen angibt. Danach ist es möglich, bei Kenntnis des Abstandes (l) zwischen Tastkugel (Tₖ) und der Drehachse (A) Tastkugelkoordinaten (X und Y) in der Ebene zu bestimmen. Der Abstand (l) ist in der Darstellung nach Figur 6a überhöht dargestellt. Es ist zweckmäßig, diesen Abstand möglichst klein zu halten, da dann für die Messung des Winkels δ₄ nur ein preiswerter Geber mit geringer Auflösung benötigt wird, der keine hohe Meßgenauigkeit besitzen muß. Wenn diese Voraussetzung nicht gegeben ist und mit Hilfe der Spanndrähte (416) die Referenzlinie, gegen die der Winkelgeber (110) mißt, nicht ausreichend genau festgelegt wird, kann ein starrer Lenkerstab anstelle eines der Spanndrähte oder zusätzlich verwendet werden.

Da sich die Tastkugel (Tₖ) unterhalb der durch die Meßstrahlen r₄ und r₅ aufgespannten Ebene befindet können Meßfehler auftreten, wenn die Z-Führung für den Tastkopfträger (104) nicht stets lotrecht zu dieser Ebene ausgerichtet ist. Solche Verkippungen können beispielsweise durch dynamische Kräfte beim Bewegen des Höhenmeßgerätes hervorgerufen werden oder durch die mangelnde Ebenheit der Granitplatte (101) bedingt sein, auf der das Höhenmeßgerät (102) mittels Luft lagern gleitet. Die entsprechenden Verhältnisse sind in der Seitenansicht nach Figur 6b anschaulich dargestellt. Es ergibt sich ein von der Höhe (Z) abhängiger Lagefehler der Tastkugel (Tₖ) in der Ebene (X,Y) abhängig von dem mit α₄ bezeichneten Kippwinkel. Im dargestellten Beispiel ist der Kippwinkel (α₄) der einfacheren Darstellung halber in der Vertikalebene eingezeichnet, in der die Taststiftachse liegt. Es ist jedoch klar, daß Verkippungen nach allen Seiten auftreten können und deshalb auch die Komponente des Kippwinkels in der Richtung senkrecht zur Zeichnungsebene berücksichtigt werden muß.

In einer zur Durchführung von hochgenauen Messungen geeigneten Ausführungsform sind wie in Figur 6a und Figur 6b dargestellt in die Grundplatte (109) des Höhenmeßgerätes (102) drei Induktiv- taster (M₁, M₂ und M₃) eingebaut, die den Abstand zur Oberfläche der Granitplatte (101) messen. Aus den Signalen dieser Induktivtaster läßt sich der Kippwinkel α₄ bzw. lassen sich die Korrekturkoordinaten (X₂, Y₂) berechnen, die die Verkippung bezüglich der Lage in der Ebene (X,Y) hervorruft. Die Verkippung bewirkt außerdem einen Höhenfehler (Z₁), der vom Abstand zwischen dem Z-Maßstab (108) und der Tastkugel (Tₖ) abhängt. Auch dieser Korrekturwert kann mit Hilfe der Sensoren (M₁,M₂,M₃) ermittelt werden. Die erforderlichen Berechnungen der Korrekturdaten werden in einem Rechner (127) durchgeführt. Diesem Rechner sind neben den Meßwerten der Induktivtaster (M₁,M₂,M₃) die Meßwerte (r₄, r₅, δ₄ und Z) zugeführt, die von den Interferometern, den Winkelgeber (128) und vom Geber des Maßstabes (108) geliefert werden. Da die beschriebene Art der Korrektur des Kippfehlers voraussetzt, daß die Oberfläche der Platte (101) eben ist, ist im Speicher des Rechner (127) außerdem eine zweidimensionale Korrekturmatrix abgespeichert, in der alle Ebenheitsabweichungen erfaßt sind. Die Erfassung der Ebenheitsabweichungen, d.h. die Topographie der Oberfläche der Platte (101) kann beispielsweise in einem einmaligen Kalibrierlauf mit Hilfe von elektronischen Neigungsmessern ermittelt werden.

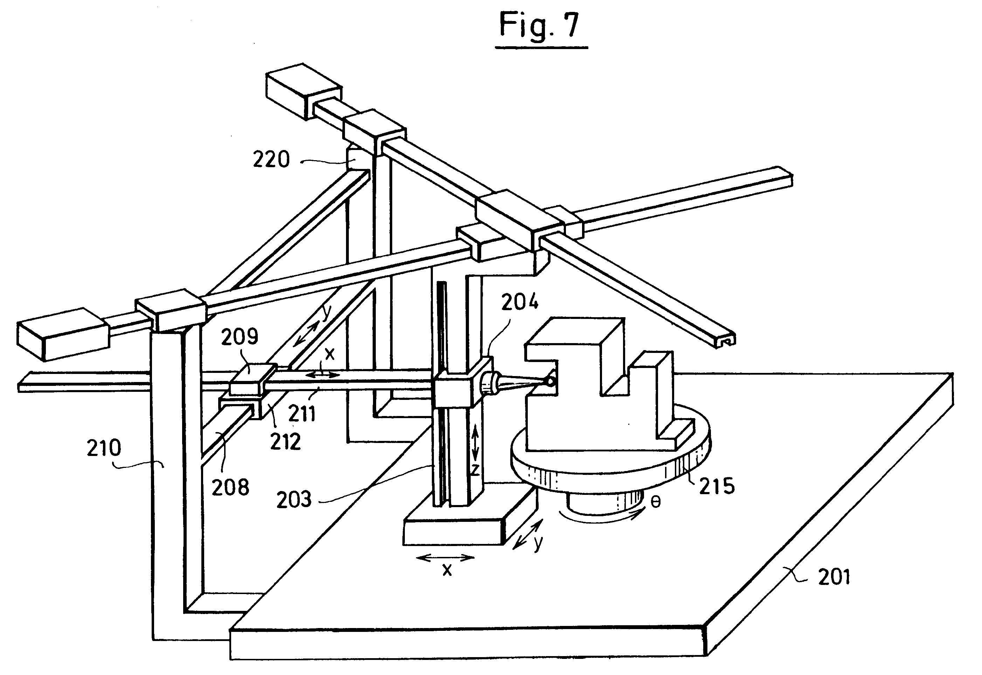

In den bisherigen Ausführungsbeispielen sind allein handbediente Koordinatenmeßgeräte gemäß der Erfindung beschrieben worden, d.h. das jeweilige Höhenmeßgerät wurde von Hand über die Granitplatte bewegt. In der Figur 7 ist eine motorisierte Versionen dargestellt. Das Ausführungsbeispiel nach Figur 7 entspricht im wesentlichen dem handbedienten Gerät nach Figur 2. Gleichartige Teile werden nicht nochmals beschrieben und besitzen deshalb auch kein Bezugszeichen.

An der Rückseite des Ständers (203) des motorisierten Meßgerätes nach Figur 10 greift eine Schubstange (211) an. Die Schubstange (211) wird von einem Linearantrieb bewegt, der sich in einem Gehäuse (209) auf einem Schlitten (212) befindet, der seinerseits über einen zweiten Linearantrieb entlang eines Querträgers (208) zwischen den beiden Säulen (210) und (220) verschiebbar ist. Die beiden Linearantriebe bewegen das Meßgerät in der Ebene (X,Y).

Die Schubstange (211) greift etwa in Höhe des Schwerpunktes des Höhenmeßgerätes an. Es kann deshalb schnell verfahren werden, ohne daß störende Kippmomente auftreten.

Da es aufgrund des im Ausführungsbeispiel speziell dargestellten Antriebes nicht möglich ist, von allen Seiten um das Werkstück herumzufahren, ist der Tisch (215) als Drehtisch oder als Schalttisch ausgebildet, der mehrere definierte Winkelstellungen ψ in Bezug auf die Grundplatte (201) einnehmen kann.

## Patentansprüche

1. Koordinatenmeßgerät mit einem auf einer ebenen Führungsplatte (1, 101, 201) verschiebbaren Träger (3, 103, 203), der einen vertikal verschiebbaren Tastkopf (7, 107) besitzt, und Meßsystemen zur Messung der vertikalen Position (7) des Tastkopfs und zur Messung der Lage des Trägers in der Ebene der Führungsplatte, einschließlich der Drehlage des Trägers um eine vertikale Drehachse, sowie einer Auswertevorrichtung (57), die aus den Meßwerten der Meßsysteme die Lage des Tastelementes (TK) am Tastkopf (7, 107) ermittelt, dadurch gekennzeichnet, daß der Träger (3, 103, 203) über mindestens einen an seinem oberen Ende angelenkten Gelenkarm bzw. Lenker mit mindestens einem feststehenden Bezugspunkt (50; 110, 120; 210, 220) verbunden ist derart, daß der Träger (3, 103, 203) unter dem bzw. den Gelenkarmen bzw. Lenkern drehbar ist, und daß die Meßsysteme zur Messung der Lage des Trägers dem bzw. den Gelenkarm(en) bzw. Lenker(n) zugeordnet sind.

2. Koordinatenmeßgerät nach Anspruch 1, dadurch gekennzeichnet, daß der Gelenkarm aus drei Gelenken besteht und den Gelenken Drehgeber zugeordnet sind.

3. Koordinatenmeßgerät nach Anspruch 1, dadurch gekennzeichnet, daß der Gelenkarm aus zwei Gelenken und einem Auszug variabler Länge besteht und den Gelenken Drehgeber und dem Auszug ein Maßstab zugeordnet sind.

4. Koordinatenmeßgerät nach Anspruch 1, dadurch gekennzeichnet, daß zwei Gelenkarme mit jeweils zwei Gelenken und je einem Auszug variabler Länge vorgesehen sind und jedem Auszug ein Maßstab sowie mindestens einem Gelenk ein Drehgeber zugeordnet ist.

5. Koordinatenmeßgerät nach Anspruch 1, dadurch gekennzeichnet, daß die bzw. der Lenker am Träger (103) mittels eines Drehgelenkes befestigt ist, dessen vertikale Drehachse (A) durch die Tastkugel (Tₖ) des am Höhenmeßgerätes befestigten Tastkopfes geht bzw. eine geringe Entfernung (l) von der Tastkugel (Tₖ) besitzt.

6. Koordinatenmeßgerät nach Anspruch 1, dadurch gekennzeichnet, daß der Träger (103) auf einer im Querschnitt großflächigeren Grundplatte (109) steht und im Verschiebebereich des Trägers ein Werkstücktisch (115) vorgesehen ist, der auf einem mittig angeordneten schlanken Fuß (11b) ruht, derart, daß der Träger mit seiner Grundplatte (109) unter die Tischfläche (115) fahren kann.

7. Koordinatenmeßgerät nach Anspruch 1, dadurch gekennzeichnet, daß die Gelenkarme (113,123) so ausbalanciert sind, daß sie im wesentlichen kräftefrei auf der Oberseite des Trägers (103) aufliegen.

8. Koordinatenmeßgerät nach Anspruch 7, dadurch gekennzeichnet, daß die beiden Gelenkarme (113,123) mittels zweier vertikaler Ständer (110,120) an der ebenen Führung (101) des Trägers (103) befestigt sind und die Ständer an ihren oberen Enden durch einen starren Querstab (118) mit geringem Wärmeausdehnungskoeffizienten befestigt sind.

9. Koordinatenmeßgerät nach Anspruch 1, dadurch gekennzeichnet, daß ein erster Antrieb für die Vertikalverschiebung (z) des Tastkopfes am Träger (203) vorgesehen ist.

10. Koordinatenmeßgerät nach Anspruch 9, dadurch gekennzeichnet, daß ein zweiter Antrieb (211) für die Horizontalverschiebung des Trägers vorgesehen ist und der zweite Antrieb (211) in Höhe des Schwerpunktes des Trägers (203) an diesem angreift.

## Claims

1. Coordinate measuring machine with a carrier (3, 103, 203) shiftable on a flat guiding plate (1, 101, 201) and featuring a vertically adjustable probe head (7, 107) and measuring systems for measuring the vertical position (7) of the probe head and for measuring the position of the carrier at the level of the guiding plate, including the rotary position of the carrier about a vertical axis of rotation, and an evaluation unit (57) which uses the results obtained by the measuring system to determine the orientation of the probing element (TK) on the probe head (7, 107), characterized by the fact that the carrier (3, 103, 203) is connected to no less than one stationary reference point (50; 110, 120, 210, 220) via no less than one hinged arm or linkage mounted at its top, to the effect that the carrier (3, 103, 203) can be rotated below the hinged arm/s or linkage/s, and that the measuring systems for measuring the carrier position are assigned to the hinged arm/s or linkage/s.

2. Coordinate measuring machine according to claim 1, characterized by the fact that the hinged arm consists of three hinges each equipped with a rotary encoder.

3. Coordinate measuring machine according to claim 1, characterized by the fact that the hinged arm consists of two hinges and one extension of variable length, with the hinges each being equipped with a rotary encoder and the extension with a scale.

4. Coordinate measuring machine according to claim 1, characterized by the fact that it features two hinged arms with two hinges and one extension of variable length each, with each extension being equipped with a scale and at least one hinge with a rotary encoder.

5. Coordinate measuring machine according to claim 1, characterized by the fact that the linkage/s is/are mounted on the carrier (103) by means of a pivot joint whose vertical axis of rotation (A) extends through the probe tip (Tₖ) of the probe head mounted on the height-measuring unit or is only a minimum distance (I) away from the probe tip (Tₖ).

6. Coordinate measuring machine according to claim 1, characterized by the fact that the carrier (103) rests on a base plate with a larger cross section (109), and that a workpiece table (115) which rests on a central, slim base (11 b) is located within the displacement range of the carrier, to the effect that the carrier can travel with its base plate (109) below the table surface (115).

7. Coordinate measuring machine according to claim 1, characterized by the fact that the hinged arms (113, 123) are balanced so as to rest virtually force-free on the upper carrier side (103).

8. Coordinate measuring machine according to claim 7, characterized by the fact that two vertical columns (110, 120) are used to mount the two hinged arms (113, 123) on the flat guideway (101) of the carrier (103) and that the columns are secured at their upper ends by means of a a rigid crossbar (118) with a low thermal expansion coefficient.

9. Coordinate measuring machine according to claim 1, characterized by the fact that a first drive for the vertical probe head displacement (z) is located on the carrier (203).

10. Coordinate measuring machine according to claim 9, characterized by the fact that a second drive (211) is provided for the horizontal carrier displacement and that the second drive acts on the carrier (203) at the level of its center of gravity.

## Revendications

1. Appareil de mesure de coordonnées équipé d'un support (3, 103, 203) pouvant être translaté sur une plaque de base plane (3, 103, 203) et possédant une tête palpeuse verticalement coulissante (7, 107), de systèmes de mesure relevant la position verticale (7) de la tête palpeuse et la position du support dans le plan de la plaque de base plane, y compris la position de rotation du support autour d'un axe de rotation vertical, ainsi que d'une unité d'analyse (57) calculant la position de l'élément palpeur (TK) de la tête palpeuse (7, 107) à partir des valeurs fournies par les systèmes de mesure, caractérisé en ce que le support (3, 103, 203) est relié, par l'intermédiaire d'au moins un bras articulé au niveau de son extrémité supérieure, à au moins un point de référence fixe (50; 110, 120; 210, 220), de telle sorte que le support (3, 103, 203) peut tourner sous le ou les bras articulés, et que les systèmes de mesure servant à relever la position du support sont associés au(x) bras articulé(s).

2. Appareil de mesure de coordonnées selon la revendication 1, caractérisé en ce que le bras articulé comprend trois articulations auxquelles sont associées des capteurs de rotations.

3. Appareil de mesure de coordonnées selon la revendication 1, caractérisé en ce que le bras articulé comprend deux articulations et un tiroir de longueur variable, des capteurs de rotation étant associés aux articulations et une échelle graduée étant associée au tiroir.

4. Appareil de mesure de coordonnées selon la revendication 1, caractérisé en ce qu'il est prévu deux bras articulés comprenant chacun deux articulations et un tiroir de longueur variable, une échelle graduée étant associée à chaque tiroir et un capteur de rotation étant associé à au moins une articulation.

5. Appareil de mesure de coordonnées selon la revendication 1, caractérisé en ce que le ou les bras articulés sont fixés au support (103) par l'intermédiaire d'une articulation tournante dont l'axe de rotation vertical (AP) passe par la boule palpeuse (Tₖ) de la tête palpeuse fixée au support, ou se trouve à une faible distance (I) de la boule palpeuse (Tₖ).

6. Appareil de mesure de coordonnées selon la revendication 1, caractérisé en ce que le support (103) repose sur une plaque de base (109) de plus grande superficie de section et qu'un plateau porte-pièce (115) est prévu dans la plage de translation du support, plateau qui repose sur un mince pied (116) disposé centralement, de telle sorte que la plaque de base (109) du support peut se déplacer en dessous de la surface (115) du plateau.

7. Appareil de mesure de coordonnées selon la revendication 1, caractérisé en ce que les bras articulés (113, 123) sont équilibrés de telle sorte qu'ils reposent sensiblement librement sur le dessus du support (103).

8. Appareil de mesure de coordonnées selon la revendication 7, caractérisé en ce que les deux bras articulés (113, 123) sont fixés à l'aide de deux montants verticaux (110, 120) sur le guide plan (101) du support (103), et que les montants sont fixés à leurs extrémités supérieures par une barre transversale rigide (118) de faible coefficient de dilatation thermique.

9. Appareil de mesure de coordonnées selon la revendication 1, caractérisé en ce qu'il est prévu un premier entraînement pour la translation verticale (z) de la tête palpeuse sur le support (203).

10. Appareil de mesure de coordonnées selon la revendication 9, caractérisé en ce qu'il est prévu un second entraînement (211) pour la translation horizontale du support et que ce second entraînement (211) agit sur le support (203) à hauteur du centre de gravité de ce dernier.
